# EUROPEAN PATENT APPLICATION

(11) **EP 4 156 459 A1**
(43) Date of publication of application: **29.03.2023**
(21) Application number: 21198893.6
(22) Date of filing: 24.09.2021
(51) Int. Cl.: H02K 1/14, H02K 1/24, H02K 15/02

(54) **SPLIT MOTOR COMPONENT**

(71) Applicant: Grundfos Holding A/S, 8850 Bjerringbro (DK)
(72) Inventor: Søegaard, Allan Ivo, 8850 Bjerringbro (DK); Valler, Peter, 8850 Bjerringbro (DK); Aarestrup, Jan Carøe, 8850 Bjerringbro (DK); Bendixen, Flemming Buus, 8850 Bjerringbro (DK)
(74) Representative: Plougmann Vingtoft a/s

(57) **Abstract**

The invention is a motor component (1) for an electrical machine (20). The motor component has a carrying body (2) from which a plurality of teeth (3) extend radially inwards or outwards. The motor component comprises two subcomponents (8,9) which are dimensioned and shaped so that they can be joined by relative mutual axial displacement along the axis of rotation. The subcomponents each comprises every second of the teeth of the motor component. The carrying body has a tooth carrying surface (10) of polygonal shape with a number of sides corresponding to the number of teeth. The invention also relates to an electrical machine comprising at least one motor component and to a method of manufacturing such an electrical machine.

## Description

### FIELD OF THE INVENTION

The present invention relates to a motor component for an electrical machine, the motor component being either a rotor or a stator. In particular, it relates to a motor component which is made by joining two complementary subcomponents each carrying some of the teeth around which electrical wires are to be wound.

### BACKGROUND OF THE INVENTION

Most electrical motors have windings of electrical wires wound around the teeth of a rotor or stator component which may e.g. be made from a soft magnetic material. The winding process is complicated and involves the use of advanced winding machines. Thin needles are used to sew the windings onto the teeth through the slot openings between the tooth shoes of the teeth. The thickness of the wire and hence the needle puts demands on the slot opening. At the same time, the filling of the slot between the tooth shafts is limited by the ability of the needle to go into the slot opening. The possible fill factor of the electrical wires and thereby the motor efficiency is therefore limited by these factors in the design of a motor.

In order to fulfil the above constraints and be able to increase the fill factor, motor components have been developed that are assembled from individual teeth, e.g. made from soft magnetic material. The electrical wires are then wound around each individual tooth before they are assembled into a final motor component. Such a design is sometimes referred to as a segmented motor component or a T-segmented motor component.

However, for such motor components having multiple phases and multiple poles, this gives a high number of individual teeth to handle, and the wires have to be connected between the individual teeth. This means that even though the desired fill factor is obtainable by such a design, the manufacturing process includes a significant amount of steps which is typically undesired with respect to time and cost.

Hence, an improved motor component would be advantageous.

### OBJECT OF THE INVENTION

It is an object of the present invention to provide a motor component which makes it possible to obtain a motor having smaller dimensions and/or being more compact for a given motor power than what is available with prior art motor components.

It is another object of the present invention to provide a motor component with which the winding of the electrical wires is easier than with some prior art motor components.

It is an object of at least some embodiments of the present invention to provide a motor component with which a higher fill factor of the electrical wires can be obtained than with comparable prior art motor components.

It is another object of at least some embodiments of the present invention to provide a motor component which makes it possible to obtain a motor that has a lower weight for a given motor power than what is possible with prior art.

It is another object of at least some embodiments of the present invention to provide a motor component which makes it possible to obtain a motor that has a lower loss and therefore higher efficiency than with prior art.

It is a further object of the present invention to provide an alternative to the prior art.

In particular, it may be seen as an object of the present invention to provide a motor component that solves the above mentioned problems of the prior art.

### SUMMARY OF THE INVENTION

Thus, the above described objects and several other objects are intended to be obtained in a first aspect of the invention by providing a motor component for an electrical machine, the motor component having an axis of rotation and a carrying body from which a plurality of teeth extend radially inwards or outwards, each tooth having a tooth shaft and a tooth shoe shaped and arranged so that all the tooth shoes are arranged on an imaginary surface around the axis of rotation with slot openings between the tooth shoes,
wherein:
- the motor component comprises two subcomponents which are dimensioned and shaped so that they can be joined by relative mutual axial displacement along the axis of rotation,
- the subcomponents each comprises every second of the teeth of the motor com ponent,
- the carrying body has a tooth carrying surface, an opposite surface facing away from the tooth carrying surface, and a front surface and a rear surface there between, and
- the tooth-carrying surface is of polygonal shape with a number of sides corresponding to the number of teeth.

The motor component is a rotor or a stator of an electromagnetic motor or generator of the electrical machine. Therefore, even though reference is made to "motor component" throughout the text, it could also be called "motor or generator component". After the manufacturing of the subcomponents, electrical wires are wound around the tooth shafts, and the design with two subcomponents facilitates this winding, because the winding can be done before the subcomponents are assembled. Hereby a more efficient winding process can be obtained, because there is more free space available during the winding.

The "carrying body" of such a motor component is sometimes referred to as the yoke. It is typically circumferentially arranged with "circumferentially" referring to an outer or inner circumference of the motor component dependent on the radial orientation of the teeth.

The space between two teeth is referred to as a "slot". Thus, a slot extends from, and comprises, the slot opening to the carrying body; i.e. the largest part of the slot is between the tooth shafts.

In a motor component according to the invention, there will typically be an even number of teeth, but the scope of protection also covers un-even numbers.

What is referred to as a "tooth shoe" could also be called a "tooth crown".

The front and the rear surface of the carrying body could also be referred to as the drive end and the non-drive end.

The tooth carrying surface being of polygonal shape results in a motor component in which there is sufficient space for using a thicker wire for a given number of windings than if a circular tooth carrying surface is used. The possibility of using a thick electrical wire is particularly relevant for low voltage applications. The use of a thicker wire results in a lower electrical resistance and thereby lower electrical loss during operation and therefore a more efficient machine. Alternatively, if the same type of wire is used as in a prior art motor, a smaller motor component according to the invention could still have space for as many windings as a similar prior art motor component with a circular tooth-carrying surface. This would be desirable for applications where size, weight, and efficiency of the motor component are of importance, such as for handheld power tools.

In some embodiments of the invention, the subcomponents are dimensioned and shaped so that they can be separated again after joining by relative mutual axial displacement along the axis of rotation. Hereby it will be possible to disassemble the component for possible re-use or easier repair either in another similar application or after recycling of the material itself.

The reference to the relative mutual displacement for joining and possibly also separation of the subcomponents being "axial" does not exclude that the subcomponents are also mutually displaced or rotated in other directions for the joining or separation. They may e.g. be mutually moved in a screwing movement provided that they have a shape that allows therefore.

The reference to the tooth-carrying surface being of polygonal shape does not exclude that the sides of the polygon meet in rounded regions of intersection instead of sharp corners. By using rounded corners, the mechanical stress distribution during use is less likely to cause crack initiation or other types of damage to the motor component.

In some embodiments of the invention, the opposite surface of the carrying body is also of polygonal shape. Hereby it may e.g. be possible to optimize the amount of material used for a given motor component, or it may be possible to adapt it to match the geometry of another part in which it is to be mounted or within which it is to co-operate.

The tooth shafts may be retracted from the front and rear surfaces of the carrying body. Hereby it will be possible to subsequently arrange the electrical windings in a manner in which they do not protrude beyond the front and rear surfaces. Hereby it is obtained that a narrower finished component, i.e. including the windings, can be obtained in the axial direction so that the motor may be made as small as possible for a given motor performance. This will be particularly relevant when having a plurality of motor components arranged in series.

A ratio between a circumference of a cross-section of the tooth shafts and a circumference of a circle with the same cross-sectional area may be between 1 and 4, such as between 1 and 2. A ratio of 1 gives a smallest possible circumference of a tooth shaft for a given cross-sectional area, but it may not provide the necessary available space for the windings. When determining the shape of the tooth shafts and thereby also the above mentioned ratio, the aim is to obtain as much magnetic flux as possible for a given length of electric wire to be wound around the tooth shaft. A large area of the tooth shafts enables a larger magnetic flux, but it also results in a large amount of electrical wire to be needed, and that both increases the weight and may take up too much space. Therefore, at good compromise is to be chosen.

In some embodiments of the invention, the cross-sections of the tooth shafts have rounded corners. Hereby the risk of damage of the electric wires to be wound around the tooth shafts is lowered. Furthermore, it will be possible to decrease the necessary length of electrical wire for a given cross-sectional area and thereby magnetic flux.

The cross-sections of the tooth shafts may be elongated and have a major dimension in a direction being perpendicular to the axis of rotation. Hereby there may be more space for the electric wires for a given size of the tooth shafts. An example of such an embodiment will be shown in the figures.

In presently preferred embodiments of the invention, for each subcomponent the tooth shafts abut the carrying body over the whole of their cross-section. In other words, the tooth shafts do not protrude over an edge of the carrying body. Hereby it is may be easier to avoid undesired stress concentrations or stress levels in the teeth during both during the joining of the subcomponents and during the operation of the electrical machine, because the load is carried by the full cross section.

In some embodiments of the invention, each of the subcomponents has:
- a first surface forming the front surface or the rear surface of the carrying body, and
- a stepped second surface comprised of first sections adjacent to teeth of that subcomponent, and second sections not adjacent to teeth of that sub-component, which second sections have a smaller thickness in the axial direction than the first sections, and
wherein the second surfaces of the two subcomponents have complementary shapes and dimensions so that they mate when the subcomponents are joined.

An example of such an embodiment will be shown in the figures. The first surface will typically be plane, but it may also comprise recesses. By "thickness", reference is made to the dimension being in the axial direction of the subcomponent after it has been assembled with the other subcomponent.

By "mate" is meant that the subcomponents can be joined and remain assembled. It does not necessarily mean that all adjacent surfaces are in physical contact.

There may be some clearance that allows for fine-tuning of the mutual positions of the subcomponents.

The tooth shoes may be shaped and dimensioned so that the slot openings between the tooth shoes after assembly of the subcomponents are 0 to 4 mm. The size of the slot openings may be constant along two facing tooth shoes or it may be non-constant, such as the slot openings providing a tapering gap between two tooth shoes. The tooth shoes may be shaped to provide slot openings that extend parallel to the axis of rotation, or they may extend in an inclined orientation. The design and size of the slot openings should be so that the cogging torque, resulting from the gaps of the slot openings, is limited/minimized. On the other hand, the size of the slot openings should not be so small that the flux leakage from tooth to tooth is too big, which will decrease the motor performance i.e. torque/volume.

A clear advantage of the present invention is that the slot opening is not limiting for the winding process. In non-split motor component solutions, i.e. prior art components made as unitary components and not to be assembled from subcomponents as according to the present invention, the slot opening has to be wider than both the wire and the winding needle. Furthermore, axially stepped or skewed/inclined slot openings would either require an extremely advanced winding machine or an even bigger slot opening.

The carrying body may be provided with recesses configured to accommodate electric wires which have been wound around the teeth so that the electric wires can extend away from the teeth via the recesses. The recesses may be provided in the front surface, the rear surface, and/or the surface of at least one of the sub-components facing towards the other sub-component. Such recesses may also be arranged and shaped so that they can accommodate a part of windings of the electrical wire. It may e.g. be provided as curved recesses in the part of the carrying body facing towards the windings.

The cross-sectional shape of the teeth of one of the subcomponents may be different from the cross-sectional shape of the teeth of the other subcomponent. This may e.g. be relevant for embodiments wherein electrical wires are to be wound around some of the tooth shafts only, such as around every second tooth shaft which can then be the tooth shafts of one of the subcomponents. The tooth shafts without electrical wires can then be made with smaller width but preferably the same cross-sectional areas thereby leaving more space for the electrical wires to be wound around the other tooth shafts. It should still be ensured that the smaller cross-sections are large enough to carry the magnetic flux. Preferably, oppositely arranged tooth shafts of the assembled motor component should have the same cross-sectional areas. This can advantageously be obtained by letting the cross-sectional shapes of the teeth not carrying windings have a smaller dimension in the circumferential orientation but a larger dimension in the axial direction when compared to the teeth carrying windings. This larger dimension is acceptable, since there does not have to be room for windings. At the same time, the smaller dimension in the circumferential orientation provides for more space for the electrical windings carried by the neighbouring teeth after assembly.

In some embodiments of the invention, at least some of the surfaces of the subcomponents that face towards a corresponding surface of the other subcomponent are inclined with respect to an orientation of the axis of rotation. Such inclined surfaces may be the facing surfaces of the tooth shoes as mentioned above. It may also be other surfaces as will be shown in the figures. Such inclined surfaces may e.g. be advantageous when the subcomponents are made by powder pressing, as it will hereby be easier to remove the pressed parts from their moulding tools without damaging them and/or easier to assemble the two subcomponents.

In any of the embodiments as described above, the motor component may be made from a soft magnetic composite material. Such a composite material has electrically insulating material surrounding the electrically conductive particles. This provides for a significantly higher electrical resistance and thereby a lower eddy-current loss than for a solid component made from a similar non-composite material.

In addition to the choice of shapes, dimensions and material for a given motor component, other parameters will also have to be determined in a design process. It will e.g. be relevant to determine the roughness to ensure a desired performance throughout the lifetime of the motor component. If the motor component is treated by having a powder coating applied, a predetermined roughness may be necessary to ensure a reliable result of the coating process, because it is typically easier to ensure that the coating sticks to the surface when it has a certain roughness. If the motor component is made from a powder material, process parameters related thereto will also have to be determined, such as average particle size and particle size distribution. How to determine these process parameters will be known by a skilled person working within this technical field. It will typically include a combination of computer simulations and experimentation combined with information from previous manufacturing processes.

A motor component according to the invention may further comprise electrical connectors for establishing electrical connection to another component, such as to a similar motor component. Such electrical connectors may e.g. be in the form of pins or insulation displacement connection terminals for copper and aluminium wire terminations.

A second aspect of the invention relates to an electrical machine comprising:
- at least one motor component according to the first aspect of the invention,
- electrical wires wound around at least some of the teeth of the at least one motor component,
- a complementary rotor or stator arranged to co-operate with the at least one motor component during operation of the electrical machine, and
- a power supply for powering the electrical wires.

When the at least one motor component is at least one rotor, a complementary stator is to be arranged to co-operate with it. Such a stator is typically in the form of a magnet, a squirrel cage, or a winding generating a field as will be known to a person skilled in the art. When the at least one motor component is at least one stator, a complementary rotor is to be arranged to co-operate with it. The at least one motor component, i.e. the one holding the electrical windings, may be at least partly surrounded by the co-operating complementary component, or the at least one motor component may at least partly surround the co-operating complementary component. Furthermore, as described above, the teeth around which the electric windings are wound may extend inwards or outwards from the carrying body and towards the co-operating complementary component, giving four different overall design combinations.

Such an electrical machine will typically also comprise other components than those mentioned above, such as bearings and shafts.

As described above, at least in some embodiments of the invention, the motor component is smaller than a corresponding prior art motor component. Therefore, in an electrical machine having a plurality of motor components, these can be arranged closer to each other whereby a better utilization of the magnet can be obtained.

When the electrical machine comprises a plurality of motor components, these can be arranged with the teeth aligned or offset from each other.

The electrical wires may comprise aluminium. Aluminium is cheaper and lighter than the traditionally used copper. Is also has a higher electrical resistivity, but due to the present invention allowing for a higher amount of electrical wires being present, this is not a problem. Therefore, by using aluminium wires instead of copper wires, a cheaper and lighter motor component can be used. This is particularly advantageous for some applications, such as e.g. for handheld tools and within the field of drones.

A third aspect of the invention relates to a method of manufacturing an electrical machine according to the second aspect of the invention, the method comprising the following steps:
- manufacturing the two subcomponents,
- winding the electrical wires around at least two of the tooth shafts,
- joining the subcomponents to form the motor component, and
- assembling the motor component with the complementary rotor or stator.

The subcomponents may e.g. be manufactured by powder pressing. Alternatively or in combination therewith, they may be made by 3D-printing. An example of a combination is to prepare a preform of a subcomponent by powder pressing and then finalize the subcomponent by adding details by 3D-printing that would be difficult or impossible to make by powder pressing.

In some embodiments of the invention, the step of manufacturing the two subcomponents comprises applying a coating thereto. This may e.g. be applied as a powder coating. Such a coating will provide wear protection to the motor component itself. It will typically provide some curvature to the corners of the motor component and therefore also protect the electrical wires against damage resulting from the contact with the motor component. Furthermore, such a coating may provide the motor component with electrical insulation over at least a part of the outer surface.

The motor component may be made from a soft magnetic composite material.

In some embodiments of the invention, the subcomponents are manufactured by 3D-printing.

A method according to the third aspect of the invention may further comprise a step of arranging a coil form of electrically insulating material onto the subcomponents before the step of winding. The use of such a coil form in relation to motor components is known within the technical field of the invention. However, when the motor components are made from subcomponents as in the present invention, the coil form should for some embodiments be provided from more coil form parts so that they can be arranged on the subcomponent and then joined together therewith when the subcomponents are assembled. In such embodiments, there could be four coil form parts in total, i.e. one for the front surface and one for the rear surface of each subcomponent. However, the scope of protection also covers embodiments wherein the subcomponents are assembled before arranging the coil form. In such embodiments, the coil form can be provided from two coil form parts.

As explained above, thick electrical wires are typically used for low voltage applications, and for such thick wires, it will be particularly advantageous to be able to perform the step of winding the electrical wires onto the teeth before the two subcomponents are assembled. Since the coil form parts are to be arranged before the winding process, such embodiments will typically have four coil form parts. For high voltage applications, a thinner electrical wire than for low voltage applications is typically used. Thus, for such embodiments, it may be more advantageous to join the two subcomponents before the arrangement of the coil form which therefore may be in the form of two coil form parts arranged on the front and rear surfaces of the motor component, respectively.

The first, second, and third aspects of the present invention may each be combined with any of the other aspects. These and other aspects of the invention will be apparent from and elucidated with reference to the embodiments described hereinafter.

### BRIEF DESCRIPTION OF THE FIGURES

The motor component, electrical machine, or method according to the invention will now be described in more detail with regard to the accompanying figures. The figures show one way of implementing the present invention and is not to be construed as being limiting to other possible embodiments falling within the scope of the attached claim set.
Figure 1 schematically shows an embodiment of a motor component according to the invention.
Figure 2 schematically shows the two subcomponents separated from each other.
Figure 3 schematically shows a flow diagram of a method of manufacturing a motor component with electrical wires wound around the tooth shafts.
Figure 4 schematically shows another embodiment of a motor component according to the invention.
Figure 5 schematically shows a part of a subcomponent having recesses for later arrangement of the electrical wires.
Figure 6 schematically shows a motor component having different geometries of the teeth on the two subcomponents.
Figure 7 schematically shows a subcomponent having inclined surfaces.
Figure 8 schematically shows an embodiment of a motor component having a coil form. Figure 8.a shows a coil form part, and figure 8.b shows a motor component provided with two of such coil form parts.
Figure 9 schematically shows an exploded view of embodiment of an electrical machine according to the second aspect of the invention.

### DETAILED DESCRIPTION OF AN EMBODIMENT

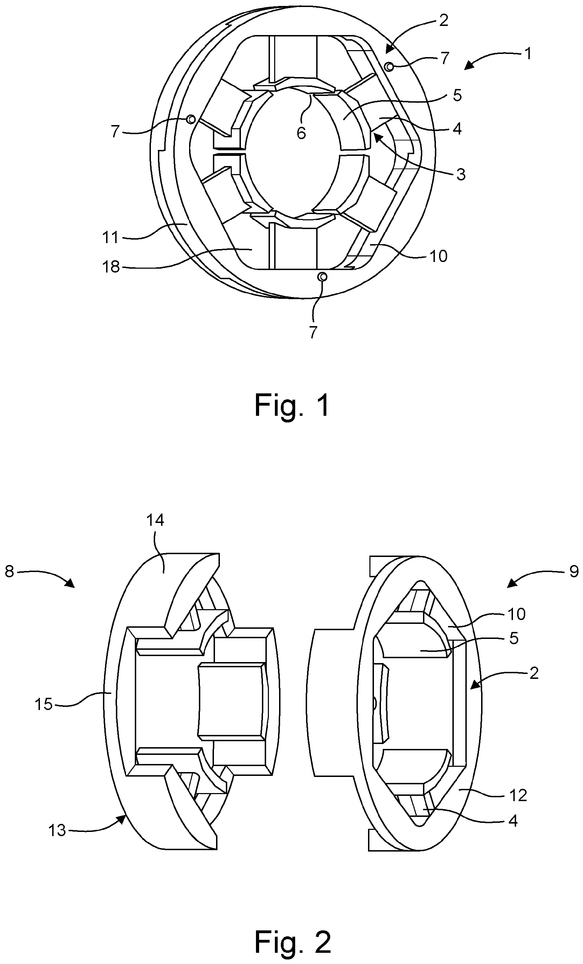

Figure 1 schematically shows an example of a motor component 1 according to the present invention. As mentioned above, the motor component 1 may be a stator or a rotor that is to corporate with a rotor or a stator, respectively. In the illustrated embodiment, the motor component 1 has a carrying body 2 from which six teeth 3 extend radially inwards. However, the scope of protection also covers embodiments in which the teeth extend outwards. Each tooth 3 has a tooth shaft 4 and a tooth shoe 5 shaped and arranged so that all the tooth shoes 5 are arranged on an imaginary surface around the axis of rotation of the motor component 1 with slot openings 6 between the tooth shoes 5. In the illustrated embodiment, the tooth shafts 4 abut the carrying body 2 over the whole of their cross-section. The motor component 1 in figure 1 comprises electrical connectors 7 for establishing electrical connection to another component, such as to a similar motor component or to the power supply. Such electrical connectors 7 may e.g. be in the form of insulation displacement connection terminals for copper and aluminium wire terminations.

The motor component 1 comprises two subcomponents 8,9 which are dimensioned and shaped so that they can be joined by relative mutual axial displacement along the axis of rotation. Figure 2 schematically shows the two subcomponents 8,9 arranged at a distance from each other. Each of the subcomponents 8,9 comprises every second of the teeth 3 of the motor component 1. The carrying body 2 has a tooth-carrying surface 10, an opposite surface 11 facing away from the tooth-carrying surface 10, and a front surface 12 and a rear surface 13 there between. The tooth-carrying surface 10 is of polygonal shape with a number of sides corresponding to the number of teeth 3; in the illustrated embodiment six. In the illustrated embodiment, the tooth shafts 4 are retracted from the front and rear surfaces 12,13 of the carrying body 2. Furthermore, the cross-section of the tooth shafts 4 has rounded corners. The embodiment in figure 2 is designed to have a first surface forming the front surface or the rear surface of the carrying body, and a stepped second surface. The second surface is comprised of first sections 14 adjacent to teeth 3 of that subcomponent and second sections 15 not adjacent to teeth 3 of that sub-component. The second sections 15 have a smaller thickness in the axial direction than the first sections 14, and the second surfaces of the two subcomponents have complementary shapes and dimensions so that they mate when the subcomponents 8,9 are joined.

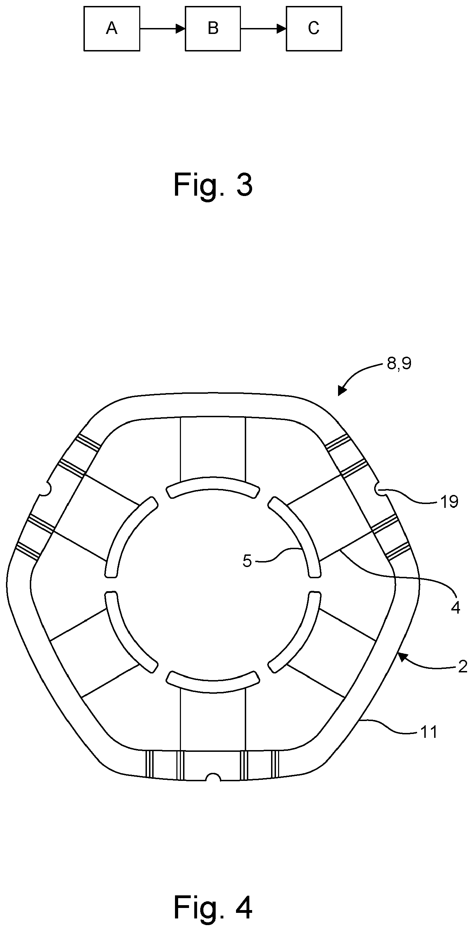

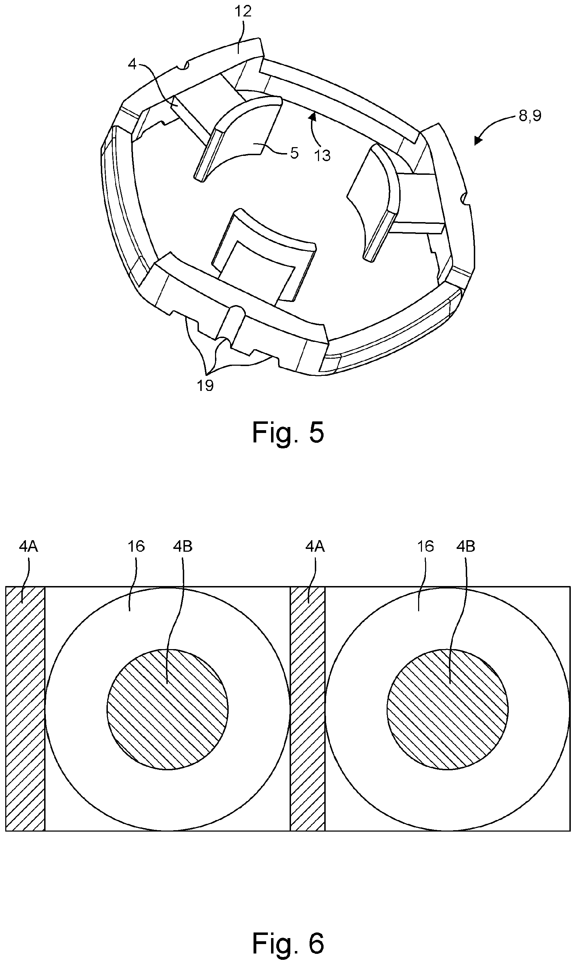

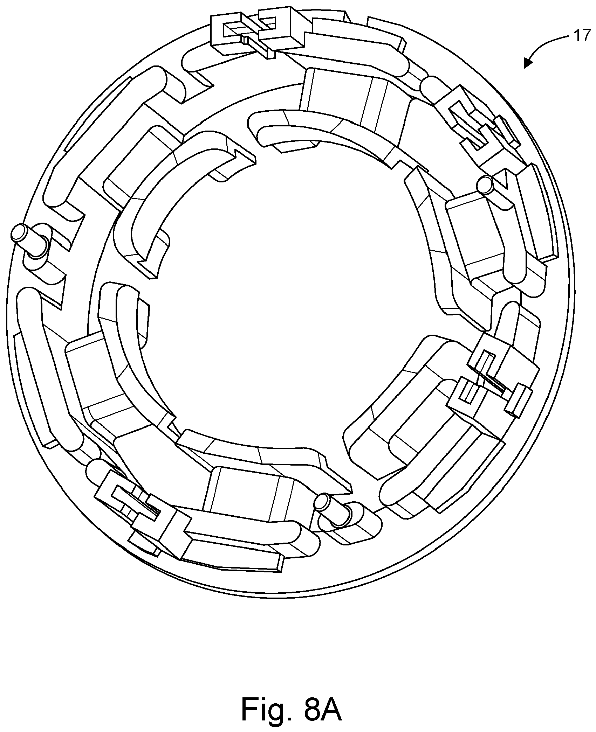

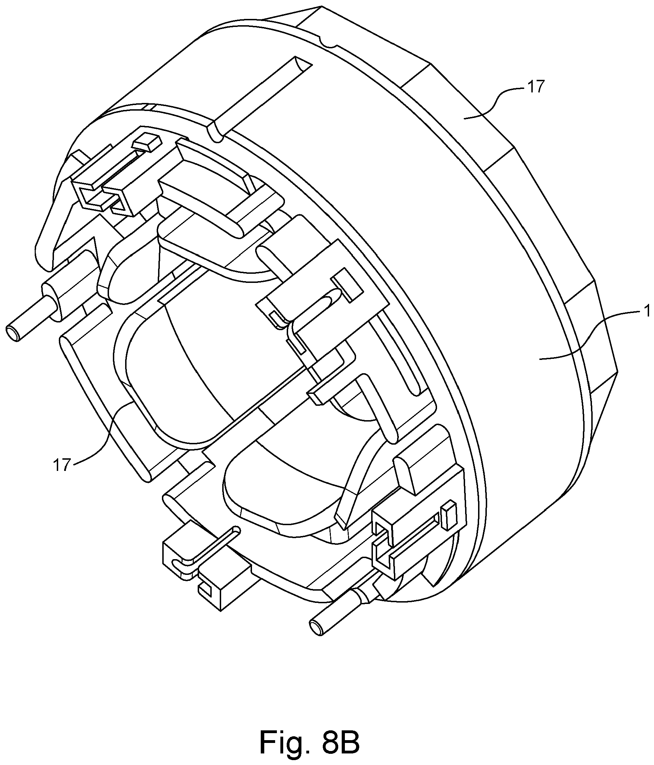

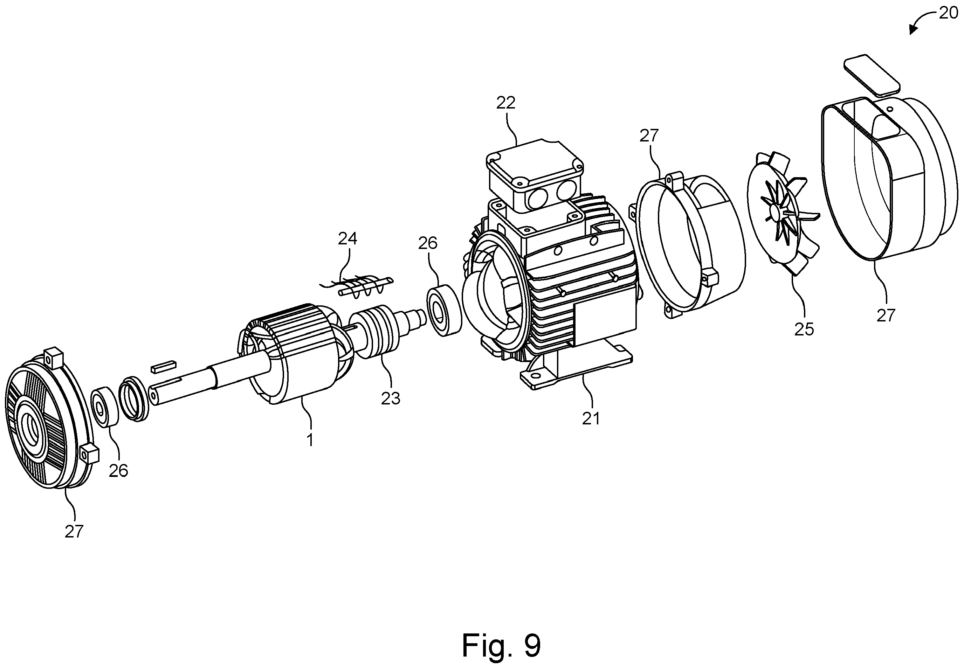

The steps of preparing the motor component 1 for use in an electrical machine (see figure 9) are schematically shown in the flow diagram of figure 3. In a first step A, the two subcomponents 8,9 are manufactured as separate parts. This may e.g. be done by powder pressing or by 3D-printing as described above, and the motor component 1 may e.g. be made from a soft magnetic composite material. Then as step B, the electrical wires 16 (see figure 6) are wound around the tooth shafts 4. The winding process is much easier than if the motor component 1 was made as one piece due to the much larger free space around the tooth shoes 5. When the electrical wires 16 have been arranged in place, the two subcomponents 8,9 are joined as shown as step C. If desired, the manufacturing step A may also comprise a step of applying a coating to the subcomponents 8,9 and/or a step of arranging a coil form 17 (see figure 8) as described above.

In the embodiment in figure 1, the slots 18 as well as the slot openings 6 are of the same size and extend parallel to the axis of rotation. However, as explained above, other designs are also possible. The tooth shoes 5 may be shaped and dimensioned so that the slot openings 6 have an opening size of 0 to 4 mm.

Figure 4 schematically shows an alternative embodiment in which the opposite surface 11 of the carrying body 2 is also of polygonal shape. In this embodiment as well as in the embodiment in figure 1, the cross-sections of the tooth shafts 4 are elongated and have a major dimension in a direction being perpendicular to the axis of rotation. This gives a very short axial length of the motor.

The carrying body 2 may be provided with recesses 19 configured to accommodate electrical wires 16 which have been wound around the teeth 3 so that the electrical wires 16 can extend away from the teeth 3 via the recesses 19. An example of such an embodiment of a subcomponent 8,9 is schematically shown in figure 5. Recesses 19 are shown in the outer circumferential opposite surface 11 as well as in the front or rear surface 12,13.

Figure 6 schematically illustrate a sectional view of a part of an embodiment in which the cross-sectional shape of the teeth 3 of one of the subcomponents is different from the cross-sectional shape of the teeth 3 of the other subcomponent. The figure shows the cross-section of four tooth shafts 4 of which every second tooth shaft 4A, i.e. from one of the subcomponents, is rectangular and has a width in the axial direction corresponding to the width of the carrying body 2, and every second tooth shaft 4B is circular and shown provided with electrical windings 16.

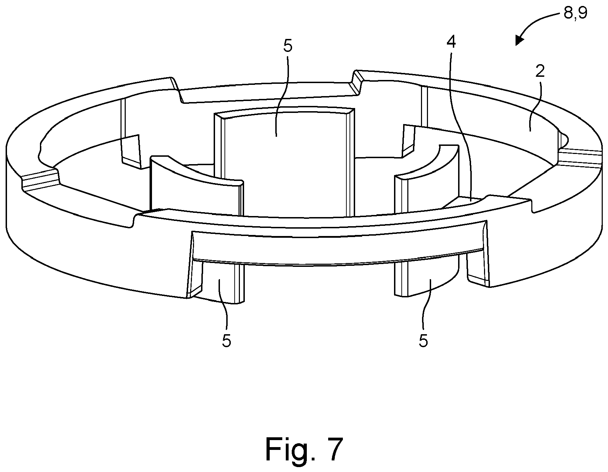

Figure 7 schematically shows an embodiment of a subcomponent 8,9 where some of the surfaces that face towards a corresponding surface of the other subcomponent are inclined with respect to an orientation of the axis of rotation. As explained above, this may be particularly advantageous when the subcomponents 8,9 are made by powder pressing, as the inclined surfaces facilitate the removal of the pressed subcomponent from the pressing tool used and/or easier assembly of the two subcomponents.

Figure 8 schematically shows an embodiment of a motor component having a coil form. Figure 8.a shows an example of a coil form part 17 before assembly with the motor component, and figure 8.b shows the assembled motor component 1 having the coil form arranged thereon by mounting a coil form part 17 from each side.

Figure 9 schematically shows an exploded view of electrical machine 20 according to the second aspect of the invention. In this embodiment, the electrical machine 20 comprises one motor component 1, but as explained above, there could be more than one motor component, typically arranged axially in series. Electrical wires are wound around the teeth of the motor component 1 as described above. In this embodiment, the motor component is a rotor, and a complementary stator 21 is arranged to co-operate with the motor component 1 as described above. The electrical machine is provided with a connecting box 22 to establish the power supply for powering the electrical wires 16. The electrical wires 16 may comprise aluminium, such as be made from aluminium and provided with and electrically insulating outer layer. The electric machine 20 also comprises other component, such as slip rings 23, a brush 24, a fan 25, bearings 26, and shielding 27 as will be well-known to a person skilled in the art.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Furthermore, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Motor component (1) for an electrical machine (20), the motor component (1) having an axis of rotation and a carrying body (2) from which a plurality of teeth (3) extend radially inwards or outwards, each tooth (3) having a tooth shaft (4) and a tooth shoe (5) shaped and arranged so that all the tooth shoes (5) are arranged on an imaginary surface around the axis of rotation with slot openings (6) between the tooth shoes (5),
wherein:
- the motor component (1) comprises two subcomponents (8,9) which are dimensioned and shaped so that they can be joined by relative mutual axial displacement along the axis of rotation,
- the subcomponents (8,9) each comprising every second of the teeth (3) of the motor component (1),
- the carrying body (2) has a tooth carrying surface (10), an opposite surface (11) facing away from the tooth carrying surface (10), and a front surface (12) and a rear surface (13) there between, and
- the tooth-carrying surface (10) is of polygonal shape with a number of sides corresponding to the number of teeth.

2. Motor component (1) according to claim 1, wherein the subcomponents (8,9) are dimensioned and shaped so that they can be separated again after joining by relative mutual axial displacement along the axis of rotation.

3. Motor component (1) according to claim 1 or 2, wherein the opposite surface (11) of the carrying body (2) is also of polygonal shape.

4. Motor component (1) according to any of the preceding claims, wherein the tooth shafts (4) are retracted from the front and rear surfaces (12,13) of the carrying body (2).

5. Motor component (1) according to any of the preceding claims, wherein a ratio between a circumference of a cross-section of the tooth shafts (4) and a circumference of a circle with the same cross-sectional area is between 1 and 4, such as between 1 and 2.

6. Motor component (1) according to any of the preceding claims, wherein the cross-sections of the tooth shafts (4) are elongated and have a major dimension in a direction being perpendicular to the axis of rotation.

7. Motor component (1) according to any of the preceding claims, wherein for each subcomponent (8,9), the tooth shafts (4) abut the carrying body (2) over the whole of their cross-section.

8. Motor component (1) according to any of the preceding claims, wherein each of the subcomponents (8,9) has:
- a first surface forming the front surface (12) or the rear surface (13) of the carrying body (2), and
- a stepped second surface comprised of first sections (14) adjacent to teeth (3) of that subcomponent (8,9), and second sections (15) not adjacent to teeth (3) of that sub-component (8,9), which second sections (15) have a smaller thickness in the axial direction than the first sections (14), and
wherein the second surfaces of the two subcomponents (8,9) have complementary shapes and dimensions so that they mate when the subcomponents (8,9) are joined.

9. Motor component (1) according to any of the preceding claims, wherein the cross-sectional shape of the teeth (3) of one of the subcomponents (8,9) is different from the cross-sectional shape of the teeth (3) of the other subcomponent (8,9).

10. Motor component (1) according to any of the preceding claims, wherein at least some of the surfaces of the subcomponents (8,9) that face towards a corresponding surface of the other subcomponent (8,9) are inclined with respect to an orientation of the axis of rotation.

11. Motor component (1) according to any of the preceding claims, wherein the motor component (1) is made from a soft magnetic composite material.

12. Electrical machine (20) comprising:
- at least one motor component (1) according to any of the preceding claims,
- electrical wires (16) wound around at least some of the teeth (3) of the at least one motor component (1),
- a complementary rotor or stator arranged to co-operate with the at least one motor component (1) during operation of the electrical machine (20), and
- a power supply for powering the electrical wires (16).

13. Method of manufacturing an electrical machine (20) according to claim 12, the method comprising the following steps:
- manufacturing the two subcomponents (8,9),
- winding the electrical wires (16) around at least two of the tooth shafts (4),
- joining the subcomponents (8,9) to form the motor component (1), and
- assembling the motor component (1) with the complementary rotor or stator.

14. Method according to claim 13, wherein the subcomponents (8,9) are manufactured by 3D-printing.

15. Method according to claim 13 or 14, further comprising a step of arranging a coil form (17) of electrically insulating material onto the subcomponents (8,9) before the step of winding.
